(19) Europäisches Patentamt

European Patent Office

Office européen des brevets

(11) **EP 1 540 297 B1**

(12) **EUROPEAN PATENT SPECIFICATION**

(45) Date of publication and mention
of the grant of the patent:
**19.05.2010 Bulletin 2010/20**

(51) Int Cl.:
***G01M 17/02*** *(2006.01)*

(21) Application number: **03767004.9**

(22) Date of filing: **31.07.2003**

(86) International application number:
**PCT/US2003/023929**

(87) International publication number:
**WO 2004/013599 (12.02.2004 Gazette 2004/07)**

(54) **METHOD FOR CONTROLLING HIGH SPEED UNIFORMITY IN TIRES**

VERFAHREN ZUR STEUERUNG DER HOCHGESCHWINDIGKEITSGLEICHFöRMIGKEIT IN REIFEN

PROCEDE DE REGULATION DE L'UNIFORMITE A GRANDE VITESSE DES PNEUS

(84) Designated Contracting States:
**AT BE BG CH CY CZ DE DK EE ES FI FR GB GR HU IE IT LI LU MC NL PT RO SE SI SK TR**

(30) Priority: **01.08.2002 US 210306**

(43) Date of publication of application:
**15.06.2005 Bulletin 2005/24**

(73) Proprietors:
• **Société de Technologie Michelin
63000 Clermont-Ferrand Cedex 09 (FR)**
• **Michelin Recherche et Technique S.A.
1763 Granges-Paccot (CH)**

(72) Inventors:
• **ZHU, Fang
Greer - South California 29650 (US)**

• **HAIR, Clarence, Vernon, Jr.
US - GREENVILLE - SC 29607 (US)**
• **TRAYLOR, James, M.
Greer, SC 29650 (US)**

(74) Representative: **Bauvir, Jacques et al
Michelin & Cie
Service SGD/LG/PI
C.E.R. Ladoux - F35
63040 Clermont-Ferrand Cedex 09 (FR)**

(56) References cited:
**EP-A- 1 247 639     WO-A-02/099377
US-A- 5 396 438     US-A- 6 065 331**

**Description**

**BACKGROUND OF THE INVENTION**

The invention relates to tyre manufacturing methods. More particularly, the invention relates to a method for controlling and modifying tyre manufacturing processes to correct the high speed uniformity characteristics of tyres.

Conventional tyre building methods, because of their complexity, unfortunately have opportunities for introducing non-uniformities in tyres. Various products, including the casing textile plies, the belt plies, the bead rings, the inner liner, the tread and other rubber layers, each formed within a specified tolerance, are applied to a form or drum by a process with its own tolerances. The resulting structure is placed in a mould and subjected to heat and pressure to shape and cure the rubber products and bond the materials into an integrated unit.

Because of the many steps and products involved, and the cumulative tolerances in both the building steps and in the products themselves, non-uniformity in manufactured tyres is difficult to control. Products may have variability in thickness, width, placement, or other factors that result in a non-uniformity. In addition, products that are wound or wrapped on the building drum or form, for example, the carcass ply, have an overlapping joint that by definition produces a non-uniformity in the tyre.

The uniformity of a tyre may be considered as the geometric or dimensional characteristics of the tyre, or as the functional response of the tyre during rotation. The geometric aspect of uniformity relates to how evenly the various products are distributed about the axis of rotation. The functional aspect relates to how uniformly the tyre responds during rotation under load, for example, in stiffness response. During rotation of the tyres, non-uniformities present in the tyre structure produce periodically-varying forces at the wheel axis. These forces are transmitted through the suspension of the vehicle and may be felt in the seats and steering wheel of the vehicle or transmitted as noise in the passenger compartment. The amount of vibration transmitted to the vehicle occupants is sometimes referred to as the "ride comfort" or "comfort" of the tyres.

In recent years, automobile manufacturers have become more interested in tyre uniformity to improve driver comfort. Of particular interest are the uniformity characteristics at high rotation speeds because these are especially noticeable to vehicle occupants. Tyres can be evaluated for uniformity and sorted according to the automobile manufacturer's requirement, and the art contains patents directed to such methods. Sorting does nothing to correct the tyres found to be outside the acceptable sorting parameters.

Other methods have focused on modifying the uniformity characteristics of cured tyres and of tyre and wheel assemblies. Publication US 6 065 331 discloses a method for predicting high speed uniformity by correlating the low speed Radial Force Variation and Radial Run Out to the value and phase of the vertical dynamic stiffness at low speed and high speed. Publication US 5 396 438 is related to a method of for determining the Force Variation at different speed through a transfer function. These methods, however, do not address the causes of non-uniformity or provide any mechanism for modifying the tyre manufacturing process to improve uniformity before curing the non-uniformities into the tyre.

A method for controlling the uniformity of tyres during manufacture that overcomes the deficiencies in the art would prove beneficial to the art.

**SUMMARY OF THE INVENTION**

The invention provides a method for controlling the uniformity of tyre during manufacture through iterative steps of measurement and adjustment of uniformity related characteristics. More particularly, the invention relates to a method for controlling uniformity characteristics related to high speed.

Advantageously, the method according to the invention measures and relates high speed characteristics or attributes, which may be of concern to a user, to low speed attributes, which may be more readily related to tyre manufacturing steps. The invention further determines a relationship between or among the low speed attributes that minimizes the high speed attribute. Advantageously, the tyre manufacturing steps may be modified accordingly to change the low speed attributes and thereby minimize the high speed attribute.

In accordance with a first embodiment of the invention, a method includes the steps of building at least one tyre according to a series of process steps, measuring vector quantities for a uniformity characteristic at high speed and at least two uniformity characteristics at low speed, determining an optimal phase angle relationship for the vector quantities for the uniformity characteristics at low speed that results in a selected vector quantity for the uniformity characteristic at high speed, modifying at least one process step so that a vector quantity for at least one of the uniformity characteristic at low speed and mass .imbalance is adjusted toward the optimal phase angle relationship, wherein a modified series of process steps results, and, building at least one additional I tyre according to the modified series of process steps.

The inventors have discovered that mass imbalance plays a significant role in high speed uniformity characteristics, and accordingly, a preferred embodiment includes mass imbalance as one of the uniformity characteristics at low speed. According to another aspect of the invention, the method includes the step of relating through statistical analysis the low speed characteristic vector quantity and the mass imbalance vector to the high speed vector quantity to select the low speed characteristics that most closely correlate to the high speed characteristic

To sum up, and according to the above, the method for controlling high speed uniformity of tyres in tyre manufacture, comprises the steps of:

a) building at least one tyre according to a determined series of building process steps,
b) measuring for the at least one tyre vector quantities for a high speed uniformity characteristic target attribute , and at least two low speed uniformity characteristics input attributes, wherein one of said two low speed uniformity characteristic is mass imbalance,
c) building at least a second tyre where one process step of the above series of building process step is modified, and measuring tyre vector quantities at high and low speed, for the above characteristics of the tyre,
d) determining through iterative testing, the contribution of said process step modification to mass imbalance and the other low speed characteristic, from the differences in the two tyres' low speed uniformity vectors,
e) analysing statistically the relationship between the relative phase angle of the two low speed uniformity characteristic vectors input attributes and the magnitude of the high speed uniformity vector target attribute,
f) identifying from the results of the statistical analysis the optimum phase angle between the two low speed uniformity attributes which results in a minimized magnitude of the high speed uniformity characteristic attribute
g) adjusting the relative directions of the two low speed uniformity vectors input attributes by selecting the corresponding modification of said building process step,
g) building at least one additional tyre using the optimum modification of said building process step.

Analysis of the phase angles is done through repeated controlled builds and testing of tyres in which selected components are changed and the effect of the changes on uniformity is observed. This process can continue for a particular tyre model and manufacturing process and over time a body of relevant knowledge will be acquired.

The method may then be repeated to modify an additional manufacturing step related to the selected one of the low speed quantity and mass imbalance for further improvement in the high speed characteristic. For example, mass imbalance is affected by different steps in the manufacturing process, involving, to name a few, application of the carcass ply, tread band, and belt package. The step of modifying a step in the building process may involve, preferably, one or more of the mass imbalance affected steps in the initial iteration and following iterations.

It will be understood by those skilled in the art that modifying one step in the building process is unlikely to achieve the precise sought-after change in the relationship of vector quantities. Most likely, the method will need to be repeated one or more times to approach the optimum vector phase angle relationship.

Alternatively or in addition, the method in accordance with the invention may be repeated to manipulate an additional vector quantity related to the high speed characteristic for further improvement. For example, if one characteristic is addressed in a first iteration, a second or later iteration may address the low speed characteristic.

As will be understood by those skilled in the art, uniformity characteristics include, but are not limited to, radial force variation, lateral force variation, longitudinal force variation, radial run out, instantaneous rolling radius, and mass imbalance. Any combination of these may be selected for use in the method of the invention according to the particular concern. For example, a particular vehicle model may be more sensitive to one uniformity characteristic than to others, for reasons relating to the suspension design and/or components, and the method may be applied to minimize that characteristic for tyres made for that vehicle.

It will also be understood that the low speed characteristic and the high speed characteristic need not be the same, for example, need not both be radial force variation. The selection of the low speed characteristic will be for its relation to the high speed characteristic through the statistical analysis, and thus, the effect of a change on the low speed characteristic vector on the high speed characteristic.

BRIEF DESCRIPTION OF THE DRAWINGS

Figure 1 is a schematic view of a tyre showing a frame of reference;

Figure 2 is a plot of radial force at the first harmonic versus rotation speed for a subject set of thirty tyres;

Figure 3 is plot of a simulation illustrating the possibility that a high speed radial force variation of a tyre is below the low speed radial force variation of the tyre as determined by the angular relation between mass imbalance and low speed radial force variation;

Figure 4 is a plot similar to Figure 3, the simulation illustrating the possibility that a high speed radial force variation is below a particular numerical value as determined by the angular relationship between mass imbalance and low speed radial force variation;

Figure 5 is a schematic of a tyre showing the locations of various product joints and vector quantities for uniformity attributes and angular relations there between;

Figure 6 is a graph of first harmonic (H1) radial force variation magnitude by speed of rotation for three test tyres;

Figure 7 is a graph of radial force variation magnitude by speed of rotation for the three test tyres of Figure 6 after correction; and,

Figure 9 is a graph of second harmonic (H2) radial force variation versus speed for an uncorrected and corrected test tyre.

## DETAILED DESCRIPTION

Tyre uniformity relates to a tyre's symmetry (or lack of symmetry) relative to its axis of rotation in terms of physical characteristics such as mass, geometry, and stiffness. Tyre uniformity characteristics, or attributes, are generally categorized in terms of dimensional or geometric parameters (variations in radial run out, lateral run out, and conicity), mass (variance in mass imbalance about the axis), and rolling force (radial force variation, lateral force variation, and tangential force variation, sometimes also I called longitudinal or fore and aft force variation). These values are typically reported as a vector, with the magnitude as the peak or maximum value and the direction given relative to the axis of rotation of the tyre.

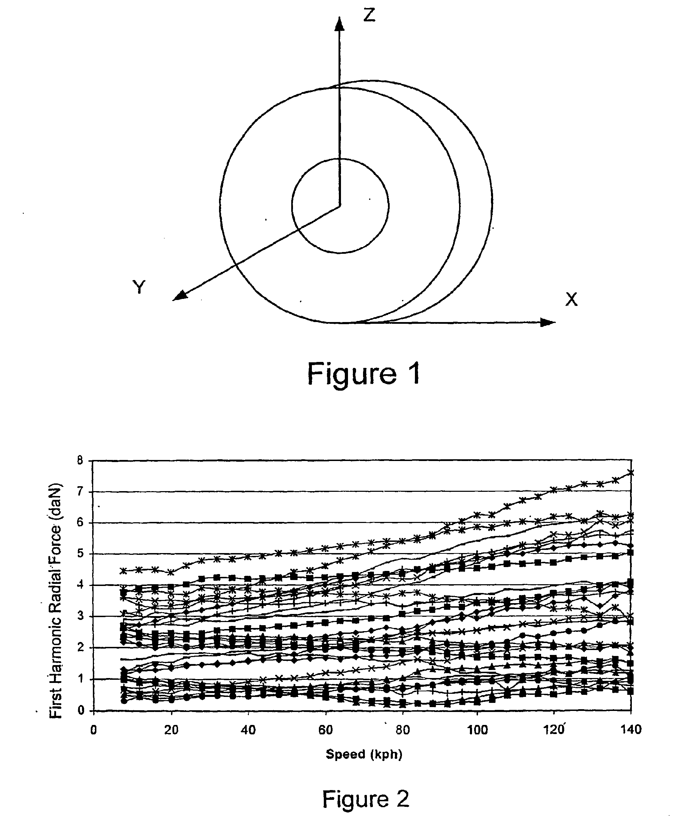

Figure 1 shows a schematic view of a tyre 10 showing a frame of reference for various uniformities attributes. The different rolling force variations are typically identified with a particular direction, for example, fore and aft, longitudinal, or tangential force variation along the x axis, lateral force variation along the y axis, and radial (or vertical) force variation along the z axis.

As known to those skilled in the art, there are various ways of measuring or calculating tyre uniformity attributes. Direct measurement of high speed attributes tends to be time consuming and requires expensive test equipment. To overcome these difficulties, methods have been developed for using low speed attribute measurements to predict high speed attributes. An example of such a method is disclosed in International Application PCT/US01/17644, which is commonly assigned with the instant application. This publication discloses a method for using Partial Least Square (PLS) regression techniques for relating low speed and geometric attributes to high speed attributes, and is incorporated herein by reference for all it discloses.

The inventors observed during tyre testing that, within a set of identical tyres (tyres of the same model and size and made at the same time according to an identical process) differences in uniformity variance existed from tyre to tyre. Figure 2 is a graphical representation of the speed-related radial force data for thirty tyres of the same make and model; made by the same manufacturing process. In measuring the change in radial force variation from low speed (corresponding to about 10 kph) to high speed (corresponding to about 140 kph), the inventors noticed that while some tyres showed an increase in radial force, others showed no increase or even a decrease. The inventors realized that by creating a method that identifies the factors responsible for these differences and controls for them, the high speed uniformity of tyres could be improved.

The method of the invention provides for the modification of the tyre building or manufacturing process to adjust selected uniformity attributes to reduce the measured variance in uniformity, and to thereby improve at least the tyre's functional uniformity. The method preferably may be done through iterations, although it is possible that a single adjustment will achieve the desired change. The iterations may address a single attribute to an optimal value, and may additionally or alternatively address sequentially different attributes. The particular steps described below represent a preferred embodiment of the invention, and should not be read as limiting.

According to the invention, a method for controlling the uniformity of tyres starts with the step of building at least one tyre, or, alternatively, a set of tyres, according to a series of defined process steps. As is known in the art, these process steps might include steps of laying plies or layers of different materials on a building drum, for example, the inner liner, carcass ply or plies, belts, sidewall covers, and tread. In addition, other products, such as the bead rings, bead reinforcement strips, and shoulder reinforcement strips, are positioned on the drum. The assembly is removed from the drum and is conformed to the toroidal tyre shape. The conformed tyre is placed in a mould, and heat and pressure are applied to form the shape features (tread pattern, sidewall markings, etc.) and to cure the rubber.

The invention can be used with any tyre building process, and the description here of a particular process using a building drum is for illustrative purposes only. For example, the method of the invention could be used with a tyre building process using a toroïdal form on which the tyre components are assembled in a tyre-like shape and the conformation step is omitted.

Once the control set of tyres is built, the next step is of measuring selected uniformity attributes for the tyres. The attributes may include dimensional or geometric variations (radial run out, lateral run out, conicity), mass variance (also called mass balance or mass imbalance), and rolling force variations (radial force variation, lateral force variation, and tangential force variation, sometimes also called longitudinal or fore and aft force variation). The dimensional attributes, the values of which do not change substantially with rotation of the tyre, may be measured using free spin or known static measuring devices. The force-related attributes, which manifest themselves when the tyre is rotating and are typically speed sensitive, are measured at high speed (typically: 140 kph) and at low speed (typically 8-10 kph). Those skilled in the art will understand that force-related, or dynamic, attributes will consist of a set of values corresponding to a series of harmonics, that is, measurement values related to the frequency of appearance of the attribute during a rotation of the tyre. Generally, the first harmonics (those occurring once per rotation) produce the largest magnitude forces, and are, accordingly, of the greatest interest for tyre ride comfort. The method in accordance with the invention is also applicable to higher harmonics.

A uniformity attribute of interest is selected as or determined to be the target attribute. The target attribute may be of interest because of a particular requirement of an automobile manufacturer. Alternatively, the attribute may be determined to be the target because it has a high magnitude, which may be the result in a change in the tyre manufacturing process or a change in materials.

The selected attributes are determined as vector quantities having a magnitude and a direction relative to the tyre geometry. It is to be understood that a particular vector quantity represents the sum of the contributions to that attribute by different products or processes, which will be referred to as the input attributes. For example, mass variance for the tyre will have contributions from the mass variance for each of the products and will represent the sum of those individual contributions. In addition, a particular product or process may contribute to more than one attribute. The tread, for example, may contribute to mass variance and may also contribute to the radial force variation.

The target attribute may be expressed in terms of input attributes, and written as:

$$V = T + C + B_1 + B_2 + R \qquad (1)$$

where, V is the target attribute, T represents the uniformity attributes contributed by the tread, C for the carcass, $B_1$ and $B_2$ for the belts and R for the rest of the products and processes. It is to be understood that each of the input attributes represents the total of the attributes contributed by that product. For example, the T quantity might be expressed as:

$$T = RFV_T + MB_T \, RRO_T + TFV_T + R_T \qquad (2)$$

where, $RFV_T$ is the radial force variation, $MB_T$ is the mass imbalance variation, $RRO_T$ is the radial run out, $TFV_T$ is the tangential force variation, and $R_T$ represents all other variances attributable to the tread. Each of the input attributes in Equation 1 could be replaced by an equation in the form of Equation 2.

As will be understood by those of skill in the art, analyzing all possible attribute variances would be unwieldy. Accordingly, a method such as that disclosed in International Application PCT/US01/17644, which is incorporated herein by reference for all it discloses, is used to relate the target attribute to other measured uniformity attributes, or input attributes. By relating the target attribute to the input attributes, the target attribute is defined in terms of a limited number of attributes that have the strongest influence on the target attribute, and may be easier to measure and/or easier to control through process change.

A relation of the target attribute to input attributes may be expressed as:

$$HV_1 = A \, {}^*LV_1 + B^*X + C + U \qquad (3)$$

where, $HV_1$ is the high speed target attribute, $LV_1$ is the low speed input attribute, X is a second input attribute, A and B are coefficients, C is a constant, and U represents all other inputs. Of course, additional input attributes may be included, but, for simplicity of the explanation, three inputs (LV, X, U) are used.

The attributes are vectors, and, thus, Equation 3 can be rewritten to express the vector quantities as the x and y components:

$$(HV_1)_x = A_{1,1}{}^*(LV_1)_x + A_{1,2}{}^*(LV_1)_y + B_{1,1}{}^*X_x + B_{1,2}{}^*X_y + C1 + U1 \qquad (4)$$

$$(HV_1)_y = A_{2,1}{}^*(LV_1)_x + A_{2,2}{}^*(LV_1)_y + B_{2,1}{}^*X_x + B_{2,2}{}^*X_y + C2 + U2 \qquad (5)$$

Next, using Principle Components Analysis (PCA) techniques, the relative importance of each of the input attributes to the target attribute is determined. A numerical value representing the importance of each input attribute is obtained from the PCA. Also, the input attributes are tested in groups to determine the amount of contribution to the target attribute. The result is groupings of input variables with an associated percentage value indicating what percentage of the target attribute is explained by each group.

From the determinations of the importance and the contribution, the overall contribution of a particular input attribute to the target attribute could be judged to be small and this attribute could be eliminated from further consideration without introducing significant error.

Accordingly, the most significant input attributes are then selected for use in subsequent steps of the method of the invention, which simplifies the handling of the attributes.

The Partial Least Squares regression will determine the coefficients $A_{1,1}$, $A_{1,2}$, $A_{2,1}$, $A_{2,2}$, $B_{1,1}$, $B_{1,2}$, $B_{2,1}$, $B_{2,2}$, $C_1$, and $C_2$ for equations 4 and 5. The magnitude of the coefficients suggests how much the associated attribute changes with speed. The coefficients for attribute magnitude values that are at or close to unity suggest, for example, that the associated attribute does not change appreciably with speed. The coefficients for attribute direction or angle values that are at or near zero suggest little or no change to vector direction.

Assuming for the purposes of this description that the unknown factor U can be ignored, equations 4 and 5 may be rewritten as:

$$(HV_1)_x = A_{1,1}{}^*(LV_1)_x + A_{1,2}{}^*(LV_1)_y + B_{1,1}{}^*X_x + B_{1,2}{}^*X_y + C1 \qquad (6)$$

$$(HV_1)_y = A_{2,1}{}^*(LV_1)_x + A_{2,2}{}^*(LV_1)_y + B_{2,1}{}^*X_x + B_{2,2}{}^*X_y + C2 \qquad (7)$$

In fact, as demonstrated by Principle Components Analysis for the thirty tyres of the sample presented in Figure 2, the contribution of U to HV is less than 5%.

The inventors discovered that mass imbalance has a significant role in high speed uniformity, and performed two simulations based on the prediction model of equations 6 and 7 to test the method described above using mass imbalance as an input characteristic.

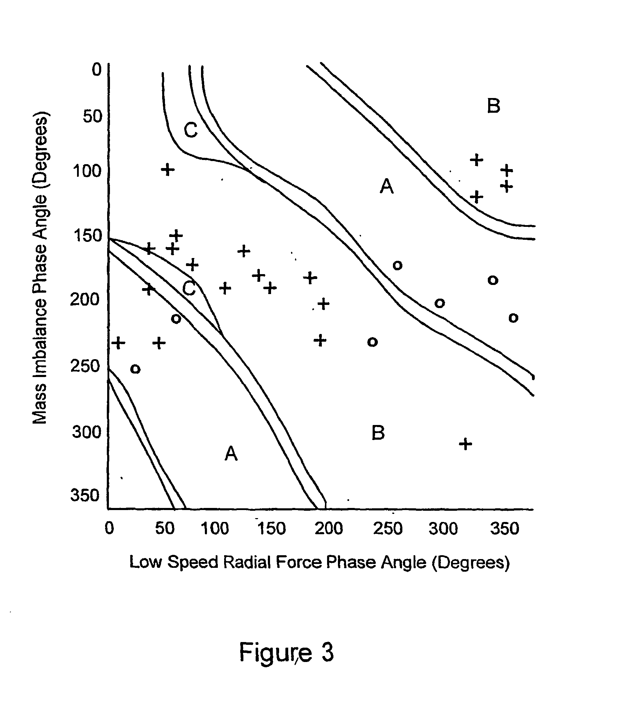

The data used was from the thirty tyres tested and shown in Figure 2. The input attributes were low speed radial force variation and mass imbalance. The magnitude of the low speed radial force variation ranged from 0.5 to 4.5 daN, and the magnitude of the force resulting from mass imbalance ranged from 4 to 30 daN. The first simulation tested the possibility that in a given tyre the magnitude of the target attribute (high speed radial force variation) would be less than a limit value (in this case, the low speed radial force variation). The high speed radial force values were plotted for the phase angle of the mass imbalance and the phase angle of the low speed radial force variation. As may be seen in Figure 3, the regions labelled "A" have a high possibility that the high speed radial force variation is lower than the low speed radial force variation. The regions labelled "B" have a lower possibility of the high speed radial force variation being lower than the low speed radial force variation. The tyres represented by circles, which represent the desired tyre constructions, fall into regions labelled "A". The plot suggests that a relative phase angle between the input attribute of approximately 180 degrees results in a minimized output or target attribute.

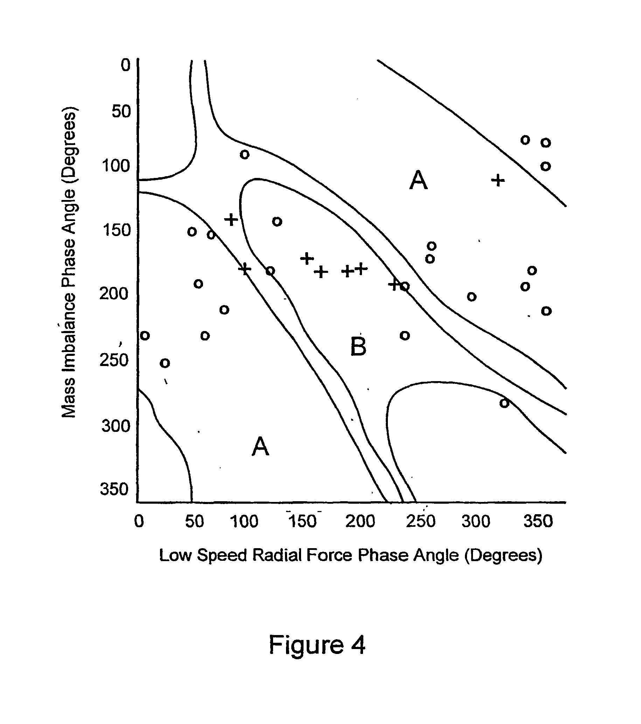

A second simulation, using the same data, tested the possibility that the magnitude of the high speed radial force variation would be less than a numerical limit, 5 daN. Figure 4 shows the results of the second simulation in the same format as Figure 3. The tyres represented by circles indicate tyres in which the magnitude of the radial force variation was less than 5 daN, the tyres represented by "+" being the case where that was not true. Again regions where the circles are plotted indicate that a phase angle relationship between mass imbalance and low speed radial force variation can help to minimize high speed radial force variation. Again, this plot indicates that a relative phase angle of approximately 180 degrees between the radial force variation at low speed and the mass imbalance minimizes the target attribute.

These simulations also indicate that to minimize the high speed characteristic at a higher harmonic, for example harmonic n, where n > 1, the relative phase angle between the low speed vector and the mass imbalance vector should be approximately 180/n degrees.

The goal of reducing the magnitude of the high speed radial force variation can be addressed through control of the input attributes. One available avenue is in the direction of the input attribute vectors. Because the input attributes are vector quantities, both the magnitude and direction of the input attributes contributes to the target attribute. It is possible, therefore, to arrange vector directions so that the resultant target attribute is minimized.

As mentioned above, each of the products assembled in the tyre contributes to the uniformity attributes and many products are assembled on the building drum or form in a manner that requires a seam or joint. Rearrangement of the various joints could be done to modify the mass distribution of the tyre, and thus, redirect the vectors for the input attributes so that the resultant target is minimized. The effect of a change on the relative position of each product cannot be measured directly, however, and must be calculated through iterative testing. One way is by building in series tyres or sets of tyres, each having one or more changed attributes, measuring the attributes, and observing the differences among them. The regression described above allows, if desired, the use of easier to measure low speed attributes, which can be related to the high speed target.

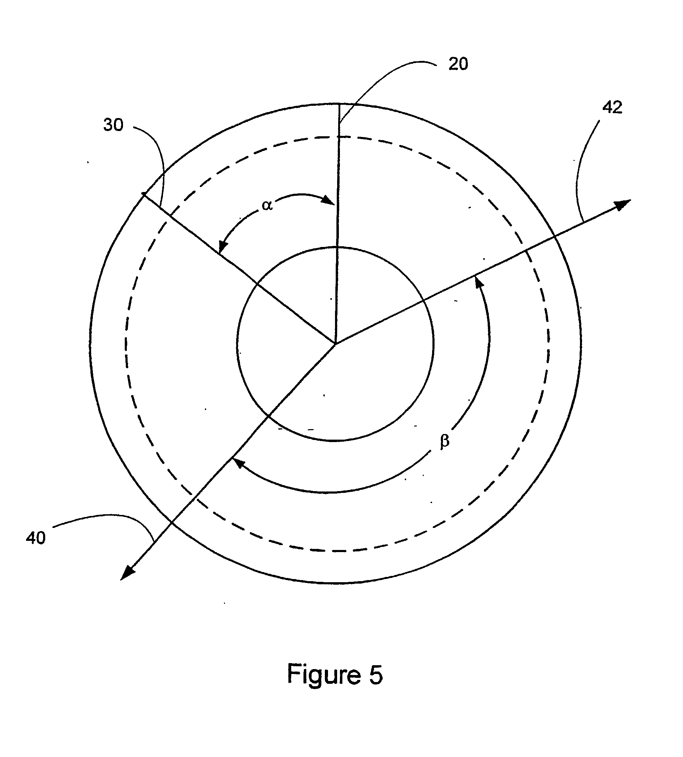

Figure 5 is a schematic representation of a tyre showing the relative position of various products and product joints. The inner liner joint 20 is convenient to use as a reference joint because it is the first product positioned on the building drum or form for tubeless, pneumatic tyres. Other product joints, such as the tread joint 30, the belt joints and the casing joint (not illustrated) or other products can be referenced to the inner liner joint 20. A reference rotation angle α between the inner liner joint 20 and the tread layer joint 30 is shown. The building process can track the various joint locations through known indexing methods. Also shown on Figure 5 are vectors representing a first input attribute 40 and a second input attribute 42, with a relative phase angle β indicated.

Thus, for example, if the analysis indicated that the phase angle between the first attribute 40 and second attribute 42 should be 180 degrees to minimize the target attribute, a second set of tyres could be manufactured with the relative location of the tread joint 30 and carcass joint 20 changed. The second set of tyres would be tested for the effect of moving the joints on the relative location of the first and second input attributes. The direction and magnitude of the vectors for the first 40 and second 42 attributes is then measured, the phase angle determined, and the effect on the target attribute is also determined. Such a procedure could be repeated as necessary to obtain the desired phase angle. During repeated builds, the desired phase angle may be refined as determined by the results of the builds and tests.

In future tyres, the orientation of other joints or products could be changed, and those effects measured. This would continue until sufficient information was gained to specify the placement of the various products to achieve the desired phase angle between the input attributes.

Thus, a non-uniformity related to the tread (the tread joint) can be used to counter a non-uniformity related to the carcass or belts, for example, to minimize the overall non-uniformities present in the tyre.

Further, tyre process steps other than the location of a product or product joint could be addressed in making changes for measurement and comparison. For example, the relative orientation of the tyre in the mould press could be changed to measure its effect. Alternatively, control of the tolerance for placing certain products on the drum or form could be analyzed, for example, the cord spacing in the carcass or belts, the product thickness, the tension at which a product is applied, and other factors known to the art.

It will be understood by those skilled in the art that obtaining perfect orientation of the product joints through the above process is unlikely. The process seeks, rather, to approach the phase angle, and it is believed that a range of +/-30 degrees will obtain significant improvement, and +/-15 degrees being more preferred.

Another available avenue for changing a vector is to reduce the magnitude of the vector. In the case of mass imbalance, which the inventors have found to have a significant contribution to high speed uniformity, the mass imbalance vector may be modified altering the mass distribution of the tyre by adding or removing material from the tyre crown area at a location opposite the mass imbalance vector. This could be done with an uncured or cured tyre.

To test the effect of mass distribution and changing the magnitude and direction of the mass imbalance vector, an experiment was performed using three tyres. The tyres were measured for first harmonic radial force variation at high speed, first harmonic radial force variation at low speed and the mass imbalance. The high speed radial force variation was set as the target attribute, and the others as the input attributes.

The measurements of the tyres are shown in Table 1 below:

TABLE 1

|  | Mass imbalance magnitude (grams) | Location from reference (deg.) | Radial Force Variation at 8 kph (daN) | Location from reference (deg.) | Location of correcting mass (deg.) |
|---|---|---|---|---|---|
| Tyre 1 (= o) | 57.8 | 67 | 6.4 | 80 | 245 - 275 |
| Tyre 2 (= Δ) | 53.6 | 219 | 9.6 | 220 | 25 - 55 |
| Tyre 3 (= x) | 71.9 | 300 | 7.4 | 270 | 75 - 105 |

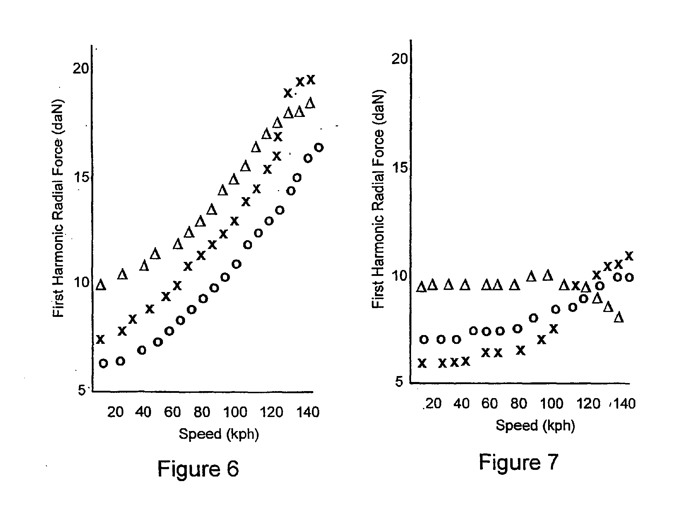

As may be seen in Table 1, the vectors for mass imbalance and radial force are nearly aligned for Tyre 2, and are within 30 degrees for Tyre 1 and Tyre 3. The measurement of the target attribute, radial force variation first harmonic, for these tyres, is shown in Figure 6. The symbols in parenthesis in the Table correspond to the plotted points in the Figure. As may be seen, the magnitude of the radial force variation increases dramatically with speed for all three tyres.

In each of the tyres, a mass of approximately 48 grams was attached at a point approximately 180 +/-15 degrees from the location of the radial force variation location shown in the Table. The tyres with the correcting mass were measured for radial force variation, and the results are shown in Figure 7, using the same symbols for the tyres. As may be seen, the radial force variation magnitude increased at a much lower rate, and, in the case of Tyre 2, actually decreased with increasing speed.

The added mass in Tyre 2, which was placed approximately 180 degrees the mass imbalance vector, substantially reduced the magnitude of this vector. This is believed to have resulted in the improvement in high speed radial force variation. For Tyres 1 and 3, the added mass modified both the magnitude of the mass imbalance vector (reducing it) and its direction. These tyres also showed improvement in high speed radial force, but not the flat responsive of Tyre 2.

As may be seen in Table 1, the correcting weight was located approximately 180 +/-15 degrees from the direction of the radial force vector. Also, because of the proximity of the mass imbalance vectors for the three tyres, the correcting weight was within about 30 degrees of being directly opposite the mass imbalance vector direction. A significant reduction in magnitude of the mass imbalance vector was thus obtained, although the resultant direction was not opposite the original vector. The inventors believe that the combination of reducing the magnitude of mass imbalance and re-directing it opposite to the direction of the radial force vector obtains the most favourable result.

A second test was performed to validate the mass imbalance modification and phase angle relationship for the second harmonic, that is, for 180/n, where n=2: In this case, the tyre is expected to have a lower second harmonic radial force variation at high speed when the phase angle between the mass imbalance vector and the second harmonic low speed radial force vector is approximately 90 degrees.

The tyre was measured for second harmonic radial force variation at high speed, second harmonic radial force variation at low speed and the mass variance. The second harmonic high speed radial force variation was set as the target attribute, and the others as the input attributes.

The measurements of the tyres are shown in Table 2 below:

TABLE 2

|  | Radial Force Variation at 8 kph (daN) | Location from reference (deg.) |
|---|---|---|
| Tyre (= o) | 7.9 | 174 and 354 |

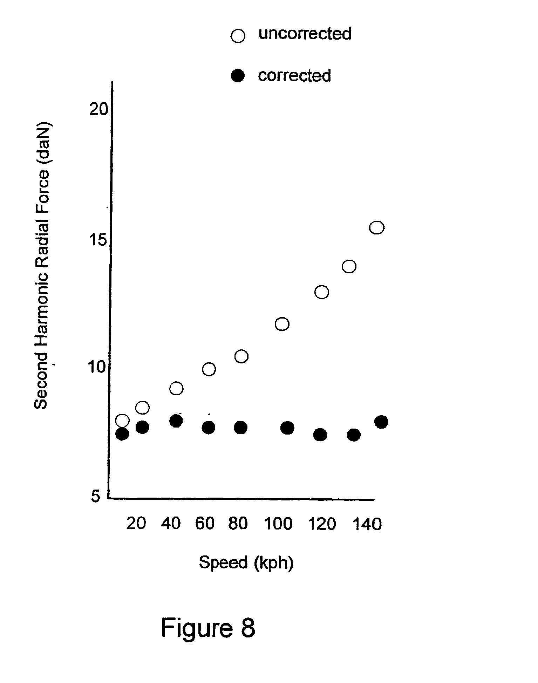

The measurement of the target attribute, second harmonic radial force variation, is shown in Figure 8 by the open circles. As may be seen, the magnitude of the radial force variation increases dramatically with speed.

To modify and lower the radial force variation, two masses each of approximately 9.6 grams were attached each at a point approximately 90 degrees from the locations of the radial force variation location shown in Table 2, that is, respectively, at 84 and 264 degrees relative to the reference. The tyre was again measured for radial force variation and the results are shown in Figure 9 by the filled circles. The improvement may be seen in that the radial force variation magnitude remained substantially flat, with no increase, with increasing speed.

## Claims

1. A method for controlling high speed uniformity of tyres in tyre manufacture, comprising the steps of:

   a) building at least one tyre according to a determined series of building process steps,
   b) measuring for the at least one tyre vector quantities for a high speed uniformity characteristic target attribute , and at least two low speed uniformity characteristics input attributes, wherein one of said two low speed uniformity characteristic is mass imbalance,
   c) building at least a second tyre where one process step of the above series of building process step is modified, and measuring tyre vector quantities at high and low speed, for the above characteristics of the tyre,
   d) determining through iterative testing, the contribution of said process step modification to mass imbalance and the other low speed characteristic, from the differences in the two tyres' low speed uniformity vectors,
   e) analysing statistically the relationship between the relative phase angle of the two low speed uniformity characteristic vectors input attributes and the magnitude of the high speed uniformity vector target attribute,
   f) identifying from the results of the statistical analysis the optimum phase angle between the two low speed uniformity attributes which results in a minimized magnitude of the high speed uniformity characteristic attribute
   g) adjusting the relative directions of the two low speed uniformity vectors input attributes by selecting the corresponding modification of said building process step,
   h) building at least one additional tyre using the optimum modification of said building process step.

2. The method according to claim 1, wherein the other low speed uniformity characteristic is selected between radial force variation, lateral force variation, longitudinal force variation, radial run out or instantaneous rolling radius.

3. The method according to claim 1 or 2, wherein the step of modifying one process step is obtained by changing the orientation angle of a product joint relative to a reference joint orientation of a reference product.

4. The method according to claim 3, wherein the said reference joint is the tyre liner joint.

5. The method according to claim 1 or 2, wherein the step of modifying one process step is obtained by modifying the mass distribution of the tyre to adjust the said mass imbalance vector.

6. The method according to claim 5, wherein the step of modifying the mass distribution is obtained by adding or removing mass at the tyre crown.

7. The method according to claim 1, wherein the phase angle between mass imbalance vector and the other low speed uniformity characteristic vector is determined as approximately 180/n degrees, where n is the harmonic number for the high speed uniformity characteristic.

8. The method according to claim 1 to 7, further comprising the steps of:

- modifying at least one additional process step so that a vector quantity for at least one of the low speed uniformity characteristics is adjusted further toward the phase angle relationship, wherein a further modified series of process steps results, and
- building at least one additional tyre according to the further modified series of process steps.

**Patentansprüche**

1. Verfahren zum Steuern der Hochgeschwindigkeitsgleichmäßigkeit von Reifen bei der Reifenherstellung, das die folgenden Schritte enthält:

a) Aufbauen wenigstens eines Reifens gemäß einer bestimmten Reihe von Aufbauprozessschritten,
b) Messen für den wenigstens einen Reifen von Vektorgrößen für ein Zielattribut einer Hochgeschwindigkeitsgleichmäßigkeits-Charakteristik und für wenigstens zwei Eingangsattribute von Niedergeschwindigkeitsgleichmäßigkeits-Charakteristiken, wobei eine der beiden Niedergeschwindigkeitsgleichmäßigkeits-Charakteristiken eine Massenunwucht ist,
c) Aufbauen wenigstens eines zweiten Reifens, wobei ein Prozessschritt der obigen Reihe von Aufbauprozessschritten modifiziert ist, und Messen von Reifenvektorgrößen bei hoher und niedriger Geschwindigkeit für die obigen Charakteristiken des Reifens,
d) Bestimmen durch iteratives Testen des Beitrags der Prozessschrittmodifikation zu der Massenunwucht und der anderen Niedergeschwindigkeitscharakteristik anhand der Differenzen zwischen den Niedergeschwindigkeitsgleichmäßigkeits-Vektoren der zwei Reifen,
e) statistisches Analysieren der Beziehung zwischen dem relativen Phasenwinkel der zwei Eingangsattribute der Niedergeschwindigkeitsgleichmäßigkeits-Charakteristikvektoren und der Größe des Zielattributs des Hochgeschwindigkeitsgleichmäßigkeits-Vektors,
f) aus den Ergebnissen der statistischen Analyse Identifizieren des optimalen Phasenwinkels zwischen den zwei Attributen der Niedergeschwindigkeitsgleichmäßigkeit, der eine minimale Größe des Attributs der Hochgeschwindigkeitsgleichmäßigkeits-Charakteristik zur Folge hat,
g) Einstellen der relativen Richtungen der zwei Eingangsattribute der Niedergeschwindigkeitsgleichmäßigkeits-Vektoren durch Auswählen der entsprechenden Modifikation der Aufbauprozessschritte,
h) Aufbauen wenigstens eines weiteren Reifens unter Verwendung der optimalen Modifikation des Aufbauprozessschrittes.

2. Verfahren nach Anspruch 1, wobei die andere Niedergeschwindigkeitsgleichmäßigkeits-Charakteristik aus einer Radialkraftveränderung, einer Querkraftveränderung, einer Längskraftveränderung, eines radialen Auslaufens oder eines momentanen Rollradius ausgewählt wird.

3. Verfahren nach Anspruch 1 oder 2, wobei der Schritt des Modifizierens eines Prozessschrittes durch Ändern des Orientierungswinkels einer Produktverbindung relativ zu einer Referenzverbindungsorientierung eines Referenzprodukts erhalten wird.

4. Verfahren nach Anspruch 3, wobei die Referenzverbindung die Innenliner-Verbindung des Reifens ist.

5. Verfahren nach Anspruch 1 oder 2, wobei der Schritt des Modifizierens eines Prozessschrittes durch Modifizieren der Massenverteilung des Reifens, um den Massenunwuchtvektor einzustellen, erhalten wird.

6. Verfahren nach Anspruch 5, wobei der Schritt des Modifizierens der Massenverteilung durch Hinzufügen oder Entfernen von Masse an der Reifenkrone erhalten wird.

7. Verfahren nach Anspruch 1, wobei der Phasenwinkel zwischen dem Massenunwuchtvektor und dem anderen Niedergeschwindigkeitsgleichmäßigkeits-Charakteristikvektor zu ungefähr 180/n Grad bestimmt wird, wobei n die harmonische Zahl der Hochgeschwindigkeitsgleichmäßigkeits-Charakteristik ist.

8. Verfahren nach Anspruch 1 bis 7, das ferner die folgenden Schritte enthält:

- Modifizieren wenigstens eines weiteren Prozessschrittes, so dass eine Vektorgröße für wenigstens eine der Niedergeschwindigkeitsgleichmäßigkeits-Charakteristiken weiter in Richtung zu der Phasenwinkelbeziehung eingestellt wird, woraus sich eine weitere modifizierte Reihe von Prozessschritten ergibt, und
- Aufbauen wenigstens eines weiteren Reifens gemäß der weiteren modifizierten Reihe von Prozessschritten.

## Revendications

1. Procédé de contrôle de l'uniformité à haute vitesse de bandages de roue lors de la fabrication des bandages de roues, comprenant les étapes qui consistent à :

a) construire au moins un bandage de roue en suivant une série déterminée d'étapes du procédé de construction,
b) mesurer sur le ou les bandages de roues les quantités vectorielles d'un attribut-cible caractéristique d'une uniformité à haute vitesse et au moins deux attributs d'entrée caractéristiques de l'uniformité à basse vitesse, l'une desdites deux caractéristiques d'uniformité à basse vitesse étant un balourd,
c) construire au moins un deuxième bandage en modifiant l'étape de traitement de la série ci-dessus d'étapes du procédé de construction et mesurer les quantités vectorielles du bandage de roue à haute et à basse vitesse pour les caractéristiques ci-dessus du bandage de roue,
d) par tests itératifs, déterminer la contribution de la modification de ladite étape du procédé à un balourd et l'autre caractéristique à basse vitesse à partir des différences entre les vecteurs d'uniformité à basse vitesse des deux bandages de roues,
e) analyser statistiquement la relation entre le déphasage entre les attributs d'entrée des deux vecteurs caractéristiques d'uniformité à basse vitesse et la grandeur de l'attribut cible de vecteur d'uniformité à haute vitesse,
f) à partir des résultats de l'analyse statistique, déterminer le déphasage optimum entre les deux attributs d'uniformité à basse vitesse qui entraînent une minimisation de la grandeur de l'attribut caractéristique d'uniformité à haute vitesse,
g) ajuster les directions relatives des deux attributs d'entrée des vecteurs d'uniformité à basse vitesse en sélectionnant une modification appropriée de ladite étape du procédé de construction et
h) construire au moins un bandage de roue supplémentaire en utilisant la modification optimale de ladite étape du procédé de construction.

2. Procédé selon la revendication 1, dans lequel l'autre caractéristique d'uniformité à basse vitesse est sélectionnée parmi la variation de la force radiale, la variation de la force latérale, la variation de la force longitudinale, l'excentricité radiale ou le rayon instantané de roulement.

3. Procédé selon les revendications 1 ou 2, dans lequel l'étape de modification d'une étape du procédé s'obtient en modifiant l'angle d'orientation d'un joint du produit par rapport à l'orientation de référence du joint d'un produit de référence.

4. Procédé selon la revendication 3, dans lequel ledit joint de référence est le joint de la garniture du bandage de roue.

**5.** Procédé selon les revendications 1 ou 2, dans lequel l'étape de modification d'une étape du procédé s'obtient en modifiant la répartition de la masse du bandage de roue de manière à ajuster ledit vecteur de balourd.

**6.** Procédé selon la revendication 5, dans lequel l'étape de modification de la répartition de masse s'obtient en ajoutant ou en enlevant de la masse sur la couronne du bandage de roue.

**7.** Procédé selon la revendication 1, dans lequel l'angle de déphasage entre le vecteur de balourd et l'autre vecteur caractéristique d'uniformité à basse vitesse est déterminé en tant qu'environ 180/n degrés, n étant le nombre harmonique de la caractéristique d'uniformité à haute vitesse.

**8.** Procédé selon les revendications 1 à 7, comprenant en outre les étapes qui consistent à :

- modifier au moins une étape supplémentaire du procédé de telle sorte qu'une quantité vectorielle d'au moins une des caractéristiques d'uniformité à basse vitesse soit davantage ajustée en direction de la relation de déphasage, ce qui entraîne une série davantage modifiée de résultats des étapes du procédé et
- construire au moins un bandage de roue supplémentaire en suivant la série davantage modifiée d'étapes du procédé.

# Figure 1

# Figure 2

Figure 3

Figure 4

Figure 5

Figure 6

Figure 7

16

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6065331 A
- US 5396438 A

- US 0117644 W